# DEMANDE DE BREVET EUROPEEN

(11) **EP 1 074 451 A1**
(43) Date de publication de la demande: **07.02.2001**
(21) Numéro de dépôt: 00402129.1
(22) Date de dépôt: 25.07.2000
(51) Int. Cl.: B62D 1/02, B62D 6/04, F16C 1/22

(54) **Direction de véhicule automobile à correction automatique de trajectoire**

(30) Priorité: 04.08.1999 FR 9910176
(71) Demandeur: NACAM France S.A., F-41100 Vendôme (FR)
(72) Inventeur: Ben Rhouma, Abdel Karim, 41100 Vendome (FR); Duval, Benoît, 41100 Vendome (FR)
(74) Mandataire: Cabinet Martinet & Lapoux

(57) **Abrégé**

Le dispositif de direction automobile comporte une colonne de direction (1), un volant de direction (2), et une tige de direction (3) des roues directrices (9) du véhicule automobile ; ladite colonne de direction (1) comportant un ensemble à câble mécanique (6). L'ensemble à câble mécanique (6) est relié du côté du volant de direction (2) par un ensemble de raccordement supérieur (23) et du côté de la tige de direction (3) par un ensemble de raccordement inférieur (24). Ledit dispositif de direction comporte une correction automatique de trajectoire du véhicule, qui est constituée d'un système d'adaptation automatique de longueur du câble mécanique (6) de direction, afin de diminuer ou d'augmenter ladite longueur du câble mécanique (6) de direction pour agir sur la tige de direction (3).

## Description

La présente invention se rapporte à un dispositif de direction à correction automatique de trajectoire d'un véhicule automobile.

Le dispositif de direction comporte un volant de direction monté sur une colonne de direction, qui est reliée à une tige de direction des roues directrices.

La colonne de direction comporte un ensemble à câble mécanique, afin de transmettre le mouvement du volant de direction à la tige de direction des roues directrices du véhicule automobile. L'ensemble à câble mécanique est relié, à sa partie supérieure, avec la partie de colonne située du côté du volant de direction. L'ensemble à câble mécanique est également relié à sa partie inférieure, avec la partie de colonne située du côté de la tige de direction. Ce type de colonne de direction a fait l'objet d'une demande de brevet français N° 99-06320 du 17 mai 1999 au nom de la demanderesse de la présente demande et intitulée "Dispositif de direction électrique et mécanique de véhicule automobile".

Le dispositif de direction selon l'invention peut également se rapporter à toute colonne de direction comportant un ensemble à câble mécanique.

Dans toutes les directions connues de véhicule automobile suivant les conditions de circulations ou les caractéristiques de l'adhérence des roues des véhicules, la trajectoire réelle du véhicule peut être différente de la trajectoire demandée et voulue par le conducteur en déterminant la position du volant de direction.

Ce phénomène apparaît notamment lorsque le véhicule doit franchir une courbe ; où la courbe réelle peut être plus grande que la courbe demandée c'est-à-dire avec la manifestation d'un sous-virage ; ou au contraire lorsque la courbe réelle peut être plus petite que la courbe demandée c'est-à-dire avec la manifestation d'un survirage.

Le phénomène peut aussi apparaître lorsque le véhicule se déplace en ligne droite, si les conditions d'adhérence entre les roues changent brusquement.

Le but de la présente invention est de proposer un dispositif de direction de véhicule automobile, qui évite les inconvénients décrits ci-dessous, tout en s'intégrant facilement dans les colonnes de direction comportant un ensemble à câble mécanique.

Selon l'invention, le dispositif de direction automobile comporte une colonne de direction, un volant de direction, et une tige de direction des roues directrices du véhicule automobile. Ladite colonne de direction comporte un ensemble à câble mécanique, afin de transmettre le mouvement du volant de direction à la tige de direction des roues directrices du véhicule automobile. L'ensemble à câble mécanique étant relié avec la partie de colonne située du côté du volant de direction par un ensemble de raccordement supérieur, et l'ensemble à câble mécanique étant relié avec la partie de colonne située du côté de la tige de direction par un ensemble de raccordement inférieur. Ledit dispositif de direction comporte une correction automatique de trajectoire du véhicule, qui est constituée d'un système d'adaptation automatique de longueur du câble mécanique de direction. Cet agencement est réalisé afin de diminuer ou d'augmenter ladite longueur du câble mécanique de direction pour agir sur la tige de direction, dans le but de modifier l'orientation de chaque roue directrice, et de ramener la trajectoire réelle du véhicule vers la trajectoire demandée par la position du volant de direction.

Avantageusement, le système d'adaptation automatique de longueur du câble mécanique de direction est agencé à l'extrémité supérieure du câble mécanique, et est intégré à l'ensemble de raccordement supérieur.

Le système d'adaptation automatique de longueur du câble mécanique de direction peut aussi être agencé à l'extrémité inférieure du câble mécanique, et être intégré à l'ensemble de raccordement inférieur.

Le système d'adaptation automatique de longueur du câble mécanique de direction peut enfin être agencé sur le câble mécanique, à l'extrémité correspondante de chacune des deux portions du câble mécanique, et être intégré audit câble mécanique.

Suivant l'invention, le système d'adaptation automatique de longueur du câble mécanique de direction comporte :
- un ensemble de jonction du câble mécanique de direction ;
- un actionneur de l'ensemble de jonction ;
- un ou des capteurs de la trajectoire réelle du véhicule automobile ;
- un capteur de la trajectoire demandée du véhicule automobile ;
- une unité centrale de traitement et de commande reliée aux différents capteurs et à l'actionneur ;
- de manière que ladite unité centrale reçoive un signal électrique du capteur de trajectoire demandée et du ou des capteurs de trajectoire réelle, et analyse la différence des deux trajectoires afin de pouvoir envoyer à l'actionneur un signal électrique de commande et de contrôle de l'ensemble de jonction du câble mécanique de direction.

Préférablement, l'actionneur est un moteur électrique.

Plus précisément, l'ensemble de jonction du câble mécanique de direction comporte :
- un moteur électrique ;
- deux mécanismes à vis et écrou de sens d'hélice opposé ; les deux mécanismes étant montés dans le moteur électrique.

Chacun des deux écrous est monté à l'intérieur du rotor du moteur électrique avec lequel il est solidaire en rotation. L'une des vis est reliée à l'extrémité correspondante du câble ou d'une des portions du câble ; et l'autre vis étant reliée à l'ensemble de raccordement correspondant, ou à l'extrémité de l'autre portion du câble.

Suivant une autre réalisation de l'invention, l'ensemble de jonction du câble mécanique de direction comporte :
- un moteur électrique ;
- deux mécanismes à vis et écrou de sens d'hélice opposé, qui sont disposés de part et d'autre du moteur électrique.

Le rotor du moteur électrique entraîne à chacune de ses extrémités la vis correspondante.

L'un des écrous est relié à l'extrémité correspondante du câble ou d'une des portions du câble, et l'autre écrou est relié à l'ensemble de raccordement correspondant ou à l'extrémité de l'autre portion du câble.

Dans une autre réalisation de l'invention, l'ensemble de jonction du câble mécanique de direction comporte :
- un moteur électrique ;
- deux bras dont une des extrémités de chaque bras s'articule autour d'un pivot, et portant chacun un écrou d'un mécanisme à vis et écrou de sens d'hélice opposé, les deux vis constituant un seul élément entraîné par le moteur électrique.

Un élément support porte une coulisse qui est sensiblement parallèle à l'axe du moteur électrique. Un montant et une embase sur laquelle sont fixés le moteur électrique et le pivot. Ladite embase est munie de deux paliers dans lesquels s'engage ladite coulisse.

L'autre extrémité de l'un des deux bras est reliée à l'extrémité correspondante du câble ou d'une des portions du câble, et l'autre extrémité de l'autre bras est reliée à l'ensemble de raccordement correspondant ou à l'extrémité de l'autre portion du câble.

Selon une autre réalisation de l'invention, l'ensemble de jonction du câble mécanique de direction comporte :
- un moteur électrique ;
- un mécanisme à vis et écrou ; la vis étant entraînée par le rotor du moteur électrique.

Une embase sur laquelle est fixé le moteur électrique. La dite embase est munie de deux paliers se déplaçant sur une coulisse portée par un élément support, ladite coulisse étant sensiblement parallèle à l'axe du moteur électrique.

L'écrou est relié à l'extrémité correspondante du câble ou d'une des portions du câble. L'embase du moteur électrique est reliée à l'ensemble de raccordement correspondant ou à l'extrémité de l'autre portion du câble.

Suivant une réalisation particulièrement intéressante de l'invention, la colonne de direction est constituée d'une partie haute de colonne et d'une partie intermédiaire de colonne. La partie haute de colonne est raccordée par l'une de ses extrémités au volant de direction.

L'ensemble à câble mécanique est constitué du câble travaillant en traction et en compression suivant le sens de rotation du volant de direction.

L'ensemble de raccordement supérieur relie l'ensemble à câble mécanique avec la partie haute de colonne de direction. L'ensemble de raccordement inférieur relie l'ensemble à câble mécanique avec la tige de direction des roues directrices.

L'ensemble de raccordement supérieur est constitué par un pignon qui engrène avec une crémaillère, et qui sont montés dans un boîtier supérieur. Ledit pignon est entraîné en rotation par la partie haute de colonne de direction. Ladite crémaillère est reliée au système d'adaptation automatique de longueur du câble mécanique de direction, qui est agencé à l'extrémité supérieure du câble mécanique et est intégré à l'ensemble de raccordement supérieur.

Dans ce dernier type d'architecture de l'invention, l'ensemble de jonction du câble mécanique de direction et le moteur électrique sont montés dans le boîtier supérieur. Les deux mécanismes à vis et écrou de sens d'hélice opposé sont agencés dans un manchon externe. Le rotor du moteur électrique est engagé sur le manchon externe, et il est solidaire avec ledit manchon externe qui est supporté par deux roulements.

Les deux écrous constituent un manchon interne unique, dont la face extérieure porte un épaulement muni de cannelures, qui coopèrent avec des cannelures aménagées sur la face intérieure du manchon externe. La crémaillère se prolonge par une tige sur laquelle est aménagée l'une des vis. Une autre tige porte l'autre vis du mécanisme correspondant sur laquelle est fixé l'embout fileté de l'extrémité supérieure du câble mécanique de direction avec un contre-écrou de blocage. Des billes sont disposées entre chacune des vis et l'écrou correspondant.

Dans ce même type d'architecture de l'invention, il peut y avoir une autre réalisation de l'ensemble de jonction du câble mécanique de direction et du moteur électrique, qui sont montés dans un boîtier supérieur muni de deux montants supportant une coulisse sensiblement parallèle à l'axe de la crémaillère. Le moteur électrique est fixé sur une embase avec un montant. Ladite embase est munie de deux paliers dans lesquels s'engage la coulisse.

Le moteur électrique porte à chacune des extrémités du rotor, la vis correspondante d'un mécanisme à vis et écrou de sens d'hélice opposé. La crémaillère se prolonge par un manchon dans lequel est aménagé un écrou du mécanisme correspondant. L'embout fileté de l'extrémité supérieure du câble mécanique de direction vient se fixer dans un manchon avec un contre-écrou de blocage. Dans ledit manchon est aménagé un écrou du mécanisme correspondant. Des billes sont disposés entre chacune des vis et l'écrou correspondant.

Dans ce même type d'architecture de l'invention, l'ensemble de jonction du câble mécanique de direction et le moteur électrique, sont montés dans un boîtier supérieur muni de deux montants supportant une coulisse sensiblement parallèle à l'axe de la crémaillère. Le moteur électrique est fixé sur une embase avec un montant. Ladite embase est munie de deux paliers dans lesquels s'engage la coulisse.

Le montant de l'embase est relié à l'extrémité de la crémaillère avec laquelle il est solidaire.

Le moteur électrique porte et entraîne, du côté opposé au montant, une vis d'un mécanisme à vis et écrou. Le mécanisme à vis et écrou a son écrou qui est disposé dans un bras. Le bras a l'une des extrémités qui s'articule autour d'un pivot monté sur l'embase. L'embout fileté de l'extrémité supérieure du câble mécanique de direction vient se fixer dans l'autre extrémité dudit bras, et il est muni de contre-écrou de blocage. Des billes sont disposées entre la vis et l'écrou.

Le dispositif de direction de véhicule automobile de trajectoire selon l'invention présente ainsi l'avantage d'augmenter considérablement la sécurité de conduite du véhicule, en adaptant à tout instant la liaison entre le volant de direction et les roues directrices du véhicule automobile. Cette adaptation présente également l'avantage d'être automatique et de ne pas nécessiter l'intervention du conducteur, qui pilote un véhicule obéissant exactement à sa demande ce qui lui donne une grande sécurité de conduite.

De plus, le dispositif de direction de véhicule automobile à correction automatique selon l'invention, peut s'adapter très facilement sur les colonnes de direction comportant un ensemble à câble mécanique.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective d'une direction de véhicule automobile selon l'invention ;
- la figure 2 est une vue schématique en coupe axiale d'un mode de réalisation du système d'adaptation automatique de longueur du câble mécanique de direction selon l'invention ;
- la figure 3 est une vue schématique analogue à la figure 2 d'un autre mode de réalisation du système d'adaptation ;
- la figure 4 est une vue schématique analogue à la figure 2 d'un autre mode de réalisation du système d'adaptation ;
- la figure 5 est une vue schématique analogue à la figure 2 d'un autre mode de réalisation du système d'adaptation ;
- la figure 6 est une vue détaillée en coupe axiale correspondant à la figure 2 ;
- la figure 7 est une vue détaillée en perspective correspondant à la figure 3 ;
- la figure 8 est une vue détaillée en perspective correspondant à la figure 5 ;

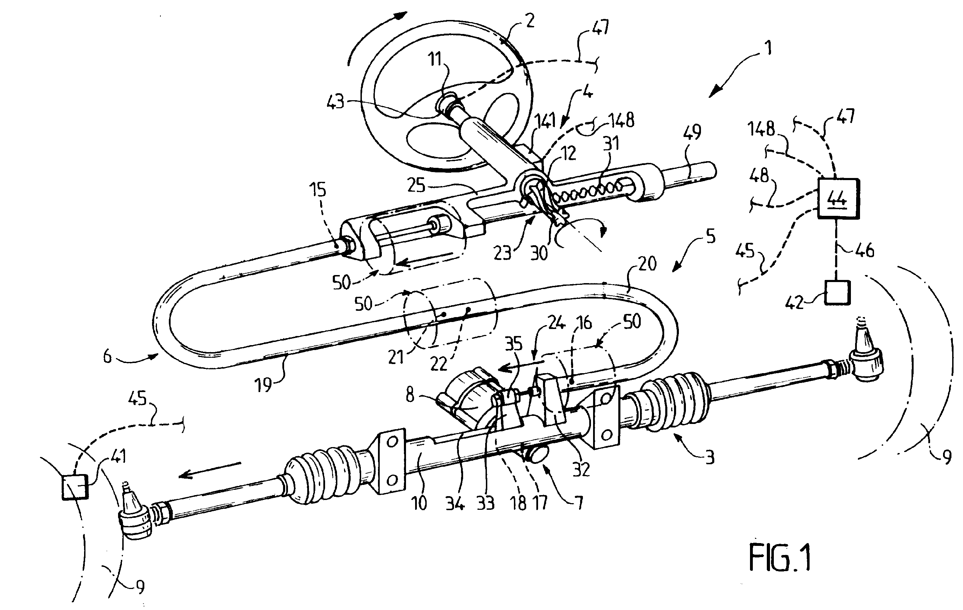

La présente invention se rapporte à un dispositif de direction automobile qui est représenté sur la figure 1 et qui comporte une colonne de direction 1, un volant de direction 2, et une tige de direction 3 des roues directrices 9 du véhicule automobile. La tige de direction 3 est montée dans un carter 10, qui est fixé sur la structure du véhicule. La tige de direction 3 commande l'orientation des roues directrices 9 du véhicule. La colonne de direction 1 comporte un ensemble à câble mécanique 6, qui permet de transmettre le mouvement du volant de direction 2 à la tige de direction 3 des roues directrices 9 du véhicule automobile. L'ensemble à câble mécanique 6 est relié avec la partie de colonne située du côté du volant de direction 2 par un ensemble de raccordement supérieur 23. L'ensemble à câble mécanique 6 est relié avec la partie de colonne située du côté de la tige de direction 3 par un ensemble de raccordement inférieur 24.

Selon une caractéristique essentielle de l'invention, le dispositif de direction comporte une correction automatique de trajectoire du véhicule, qui est constituée d'un système d'adaptation automatique de longueur du câble mécanique 6 de direction. Ce système d'adaptation permet de diminuer ou d'augmenter ladite longueur du câble mécanique 6 de direction pour agir sur la tige de direction 3, dans le but de modifier l'orientation de chaque roue directrice 9, et de ramener la trajectoire réelle du véhicule vers la trajectoire demandée par la position du volant de direction.

La colonne de direction est constituée d'une partie haute de colonne 4 et d'une partie intermédiaire de colonne 5. La partie haute de colonne 4 est raccordée par l'une de ses extrémités 11 au volant de direction 2.

L'ensemble à câble mécanique 6 est constitué du câble 6 travaillant en traction et en compression suivant le sens de rotation du volant de direction 2.

Dans ce type de réalisation, l'ensemble de raccordement supérieur 23 relie l'ensemble à câble mécanique 6 avec la partie haute de colonne de direction 4, et l'ensemble de raccordement inférieur 24 relie l'ensemble à câble mécanique 6 avec la tige de direction 3 des roues directrices 9.

Dans la réalisation représentée sur la figure 1, l'ensemble à câble mécanique 6 est intégré à la partie intermédiaire de colonne 5. Tout en restant dans le cadre de l'invention, l'ensemble à câble mécanique pourrait être intégré à la partie haute de colonne 4.

L'ensemble de raccordement supérieur 23 est constitué par un pignon 30 qui engrène avec une crémaillère 31. Le pignon 30 et la crémaillère 31 sont montés dans un boîtier supérieur qui est référencé 25 dans le cas des figures 1, 2 et 6 et qui est référencé 26 pour les autres figures. Le pignon 30 est entraîné en rotation par la partie haute de colonne de direction 4, et la crémaillère 31 est reliée au système d'adaptation automatique de longueur du câble mécanique 6 de direction, qui est agencé à l'extrémité supérieure 15 du câble mécanique 6, et qui est intégré à l'ensemble de raccordement supérieur 23.

Le câble mécanique 6 a une extrémité supérieure 15 située du côté de l'ensemble de raccordement supérieure 23, et le câble mécanique 6 a une extrémité inférieure 16 située du côté de l'ensemble de raccordement inférieure 24.

L'ensemble de raccordement inférieur 24 est constitué par un palier mobile 33 et par un palier fixe 32. Le palier mobile 33 est fixé sur la tige de direction 3, et il traverse une lumière 34 du carter 10 de la tige de direction 3.

Le palier fixe 32 est solidaire du carter 10 de la tige de direction 3. L'extrémité inférieure 16 du câble mécanique 6 traverse le palier fixe 32, et s'accroche sur la palier mobile 33 en 35.

Le câble mécanique 6 peut être divisé en deux portions 19 et 20 comme cela sera décrit ci-après, chaque portion 19 et 20 ayant respectivement une extrémité 21 et 22.

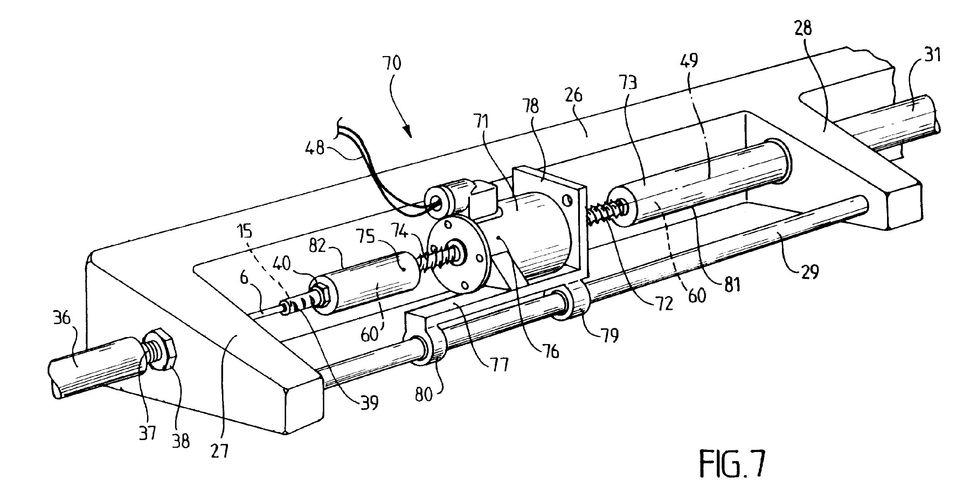

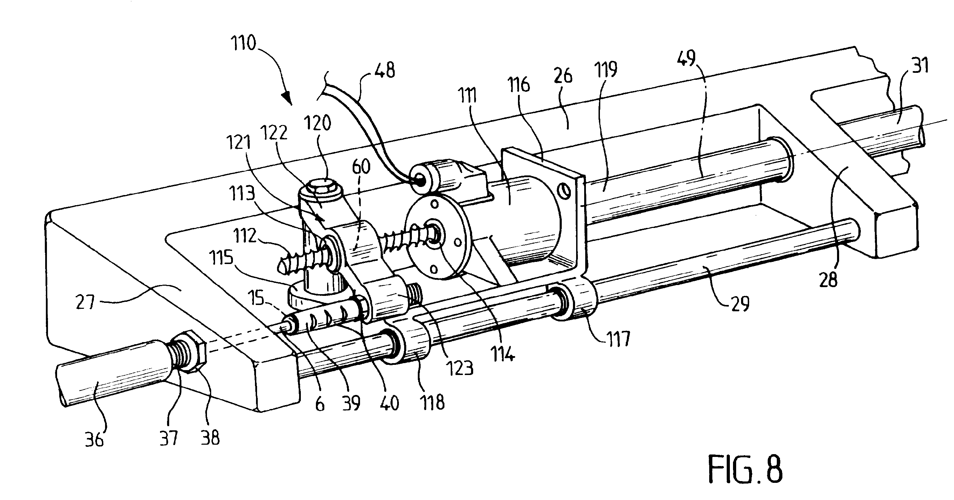

Comme cela est représenté sur les figures 7 et 8, le câble 6 possède une gaine 36, à chaque extrémité de laquelle est monté un embout fileté 37 avec un contre-écrou 38 de blocage. Un embout fileté 39 est fixé par sertissage à chaque extrémité du câble 6, ledit embout fileté 39 ayant un contre-écrou 40 de blocage.

Comme cela est représenté sur la figure 1, le dispositif de direction peut également avoir un boîtier de direction 7 avec un pignon 17 et une crémaillère 18 aménagée sur la tige de direction 3. Le pignon 17 est entraîné par un moteur électrique 8.

Comme cela est représenté schématiquement en pointillés sur la figure 1, le système d'adaptation automatique de longueur du câble mécanique 6 de direction peut être agencé à l'extrémité supérieure 15 du câble mécanique 6, et être intégré à l'ensemble de raccordement supérieur 23.

Dans une autre réalisation, le système d'adaptation automatique de longueur du câble mécanique 6 de direction peut être agencé à l'extrémité inférieure 16 du câble mécanique 6, et être intégré à l'ensemble de raccordement inférieur 24.

Dans encore une autre réalisation, le système d'adaptation automatique de longueur du câble mécanique 6 de direction peut être agencé sur le câble mécanique 6, à l'extrémité correspondante 21, 22 de chacune des deux portions 19, 20 du câble mécanique 6, et est intégré audit câble mécanique 6.

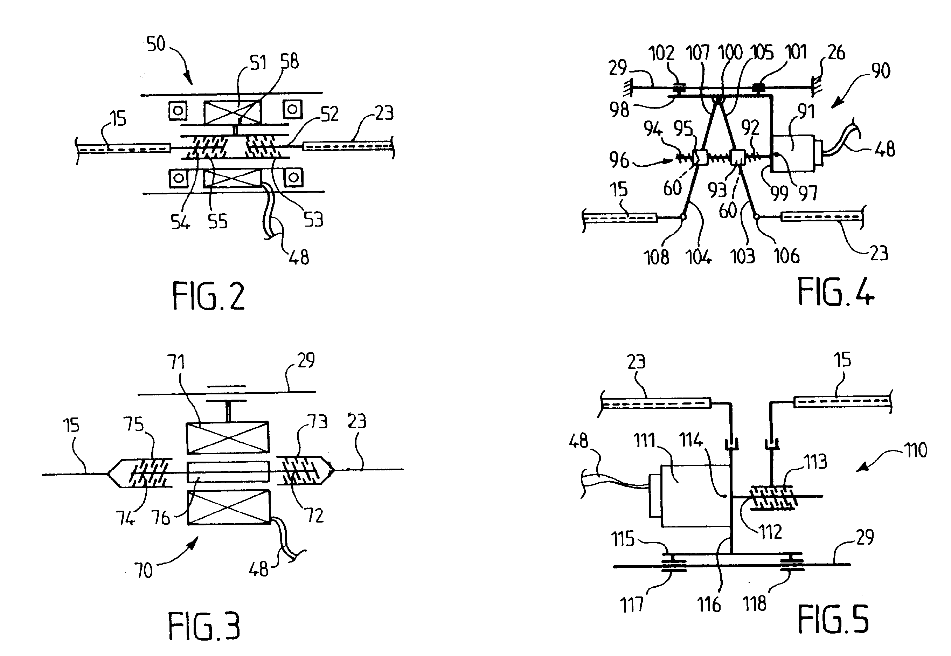

Le système d'adaptation automatique de longueur du câble mécanique 6 de direction comporte :
- un ensemble de jonction 50, 70, 90, 110 représentés sur les figures 2 à 8 du câble mécanique 6 de direction ;
- un actionneur 51, 71, 91, 111 de l'ensemble de jonction 50, 70, 90, 110 ;
- un ou des capteurs 41, 42 de la trajectoire réelle du véhicule automobile ;
- un capteur 43 de la trajectoire demandée du véhicule automobile ;
- une unité centrale de traitement et de commande 44 reliée aux différents capteurs et à l'actionneur ;
- de manière que ladite unité centrale 44 reçoive un signal électrique du capteur 43 de trajectoire demandée et du ou des capteurs 41, 42 de trajectoire réelle, et analyse la différence des deux trajectoires afin de pouvoir envoyer à l'actionneur 51, 71, 91, 111 un signal électrique de commande et de contrôle de l'ensemble de jonction 50, 70, 90, 110 du câble mécanique 6 de direction.

L'unité centrale de traitement et de commande 44 est reliée :
au capteur 41 par un conducteur 45
au capteur 42 par un conducteur 46
au capteur 43 par un conducteur 47
et à l'actionneur 51, 71, 91, 111 par un conducteur 48. L'actionneur 51, 71, 91, 111 est un moteur électrique.

Un actionneur 141 est disposé sur la partie haute de colonne de direction 4. L'actionneur 141 est agencé pour le retour d'effort entre les roues directrices 9 du véhicule et le volant de direction 2. L'actionneur de retour d'effort 141 est relié électriquement à une unité centrale de traitement et de commande 44 par un conducteur 148.

L'actionneur de retour d'effort 141 est un moteur électrique.

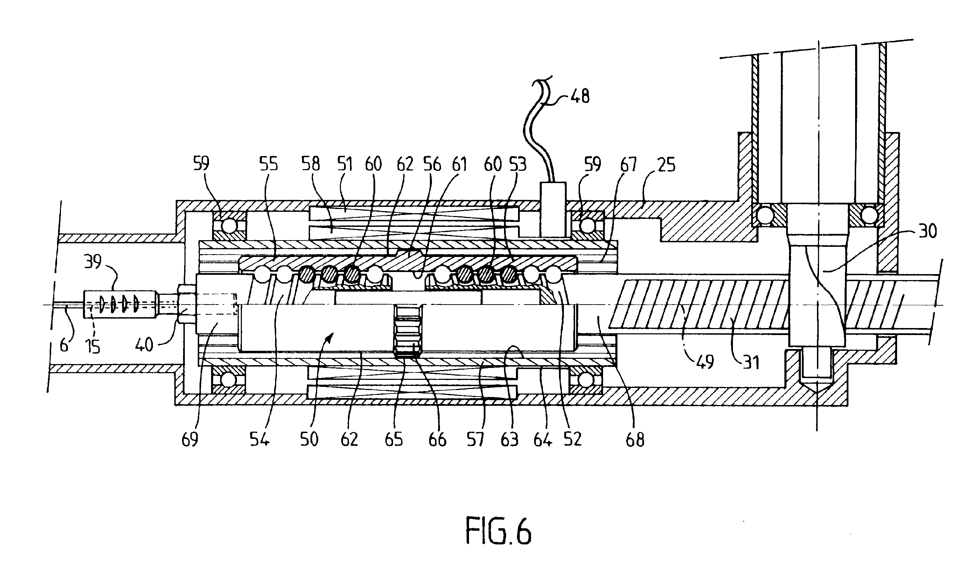

Les figures 2 et 6 se rapportent à un ensemble de jonction référencé 50. L'ensemble de jonction 50 du câble mécanique 6 de direction comporte :
- un moteur électrique 51, et
- deux mécanismes à vis et écrou ayant une hélice de sens opposé l'une par rapport à l'autre,
les deux mécanismes à vis et écrou étant agencés dans le moteur électrique 51.

L'ensemble de jonction 50 du câble mécanique 6 de direction et le moteur électrique 51 sont montés dans le boîtier supérieur 25. Un mécanisme a une vis 52 et un écrou 53, tandis que l'autre mécanisme a une vis 54 et un écrou 55 avec une hélice de sens opposé au premier mécanisme.

Les deux mécanismes sont disposés dans un manchon externe 57.

Le moteur électrique 51 a son stator qui est fixé dans le boîtier 25. Le rotor 58 du moteur électrique 51 est engagé sur la face extérieure 64 du manchon externe 57. Le rotor 58 et le manchon externe 57 sont solidaires.

De plus, le manchon externe 57 est supporté par deux roulements 59, qui sont montés sur la face extérieure 64.

Les deux écrous 53 et 55 constituent un manchon interne 56 unique, qui se monte dans le manchon externe 57. Le manchon interne 56 a une face extérieure 62 et une face intérieure 61. La face extérieure 62 porte un épaulement 65 muni de cannelures 66. Les cannelures 66 coopèrent avec des cannelures 67, qui sont aménagées sur la face intérieure 63 du manchon externe 57. Ainsi, le manchon externe 57 et le manchon interne 56 sont solidaires en rotation par l'intermédiaire des cannelures 66 et 67, et ils sont libres en translation axiale l'un par rapport à l'autre.

La crémaillère 31 se prolonge par une tige 68 sur laquelle est aménagée l'une des vis 52 de l'un des mécanismes. Une autre tige 69 porte l'autre vis 54 de l'autre mécanisme. L'embout fileté 39 de l'extrémité supérieure 15 du câble mécanique 6 de direction est fixé dans la tige 69.

Un contre-écrou 40 garantit le blocage de l'embout fileté 39 dans la tige 69.

Afin d'améliorer le fonctionnement des deux mécanismes à vis et écrou, des billes 60 sont disposées entre les hélices de la vis 52 avec l'écrou 53, et entre les hélices de la vis 54 avec l'écrou 55.

Lorsque l'ensemble de jonction 50 est intégré à l'ensemble de raccordement inférieur 24, la tige 68 de la vis 52 est reliée à cet ensemble de raccordement inférieur 24, et la tige 69 de l'autre vis 54 reçoit l'extrémité inférieure 16 du câble mécanique 6.

Enfin, lorsque l'ensemble de jonction 50 est interposé entre les deux portions 19 et 20 du câble mécanique 6, la tige 68 de la vis 52 reçoit l'extrémité 22 de la portion 20, et la tige 69 de la vis 54 reçoit l'extrémité 21 de la portion 19.

Les figures 3 et 7 se rapportent à un ensemble de jonction référencé 70.

L'ensemble de jonction 70 du câble mécanique 6 de direction comporte :
- un moteur électrique 71, et
- deux mécanismes à vis et écrou ayant une hélice de sens opposé l'une par rapport à l'autre,
les deux mécanismes à vis et écrou étant disposés de part et d'autre du moteur électrique 71.

L'ensemble de jonction 70 du câble mécanique 6 de direction et le moteur électrique 71 sont montés dans un boîtier supérieur 26.

Un mécanisme est constitué d'une vis 72 et d'un écrou 73, tandis que l'autre mécanisme est constitué d'une vis 74 et d'un écrou 75 avec une hélice de sens opposé au premier mécanisme.

Le moteur électrique 71 entraîne à chacune de ses extrémités la vis correspondante 72 et 74.

Le boîtier supérieur 26 est muni de deux montants 27 et 28, qui supportent une coulisse 29. La coulisse 29 est sensiblement parallèle à l'axe 49 de la crémaillère 31.

Le moteur électrique 71 est fixé sur une embase 77 et sur un montant 78.

Le montant 78 est sensiblement perpendiculaire à l'embase 77 ; le montant 78 et l'embase 77 constituent un seul ensemble monobloc. L'embase 77 est munie de deux paliers 79 et 80, dans lesquels s'engage la coulisse 29.

Le moteur électrique 71 a un stator et un rotor 76 avec deux extrémités de sortie. Chacune des extrémités du rotor 76 porte la vis 72 ou la vis 74 qui correspond à chacun des mécanisme à vis et écrou.

La crémaillère 31 se prolonge par un manchon 81. L'écrou 73 est aménagé dans le manchon 81, et il reçoit la vis 72 du mécanisme à vis et écrou. L'embout fileté 39 de l'extrémité supérieure 15 du câble mécanique 6 de direction se fixe dans un manchon 82. Un contre-écrou 40 garantit le blocage de l'embout fileté 39 dans le manchon 82. L'écrou 75 est aménagé dans le manchon 82, et il reçoit la vis 74 du mécanisme à vis et écrou.

Dans le but d'améliorer le fonctionnement des deux mécanismes à vis et écrou, des billes 60 sont disposées entre les hélices de la vis 72 avec l'écrou 73, et entre les hélices de la vis 74 avec l'écrou 75.

Lorsque l'ensemble de jonction 70 est intégré à l'ensemble de raccordement inférieur 24, le manchon 81 de l'écrou 73 est reliée à cet élément de raccordement inférieur 24, et le manchon 82 de l'autre écrou 75 reçoit l'extrémité inférieure 16 du câble mécanique 6.

Enfin, lorsque l'ensemble de jonction 70 est interposé entre les deux portions 19 et 20 du câble mécanique 6, le manchon 81 de l'écrou 73 reçoit l'extrémité 22 de la portion 20, et le manchon 82 de l'écrou 75 reçoit l'extrémité 21 de la portion 19.

La figure 4 se rapporte à un ensemble de jonction référencé 90.

L'ensemble de jonction 90 du câble mécanique 6 de direction comporte :
- un moteur électrique 91, et
- deux mécanismes à vis et écrou ayant une hélice de sens opposé l'une par rapport à l'autre,
les deux mécanismes à vis et écrou étant disposés d'un seul côté du moteur électrique 91.

L'ensemble de jonction 90 du câble mécanique 6 de direction et le moteur électrique 91 sont montés dans un boîtier supérieur 26.

Un mécanisme est constitué d'une vis 92 et d'un écrou 93, tandis que l'autre mécanisme est constitué d'une vis 94 et d'un écrou 95, avec une hélice de sens opposé au premier mécanisme.

Le boîtier supérieur 26 est muni de deux montants 27 et 28 qui supportent une coulisse 29, comme cela est représenté sur la figure 7. La coulisse 29 est sensiblement parallèle à l'axe 49 de la crémaillère 31.

Le moteur électrique 91 est fixé sur une embase 98 et sur un montant 99. Le montant 99 et l'embase 98 sont sensiblement perpendiculaires ; le montant 99 et l'embase 98 formant un seul ensemble monobloc. L'embase 98 est munie de deux paliers 101 et 102 supportés par la coulisse 29. Le moteur électrique 91 avec son embase 98 peut ainsi se déplacer sur la coulisse 29.

Le moteur électrique a un stator et un rotor 97.

Les deux vis 92 et 94 constituent un seul élément 96 qui est porté et entraîné par le rotor 97 du moteur électrique 91.

Un pivot 100 est monté sur l'embase 98. L'axe du pivot 100 est sensiblement perpendiculaire à l'embase 98.

Deux bras 103 et 104 ont une extrémité respective 105 et 107, qui est montée et qui s'articule autour du pivot 100. Le bras 103 porte l'écrou 93, qui reçoit la vis 92, et le bras 104 porte l'écrou 95, qui reçoit la vis 94.

Le bras 103 a une autre extrémité 106 qui est reliée à l'ensemble de raccordement supérieur 23, et le bras 104 a une autre extrémité 108 qui est reliée à l'extrémité supérieure 15 du câble mécanique 6.

Pour améliorer le fonctionnement des deux mécanismes à vis et écrou, des billes 60 sont disposées entre les hélices de la vis 92 avec l'écrou 93, et entre les hélices de la vis 94 avec l'écrou 95.

Lorsque l'ensemble de jonction 90 est intégré à l'ensemble de raccordement inférieur 24, l'extrémité 106 du bras 103 est reliée à cet élément de raccordement inférieur 24, et l'extrémité 108 du bras 104 est reliée à l'extrémité inférieure 16 du câble mécanique 6.

Enfin, lorsque l'ensemble de jonction 90 est interposé entre les deux portions 19 et 20 du câble mécanique 6, l'extrémité 106 du bras 103 est reliée à l'extrémité 22 de la portion 20, et l'extrémité 108 du bras 104 est reliée à l'extrémité 20 de la portion 19.

Les figures 5 et 8 se rapportent à un ensemble de jonction référencé 110.

L'ensemble de jonction 110 du câble mécanique 6 de direction comporte :
- un moteur électrique 111, et
- un mécanisme à vis et écrou.

L'ensemble de jonction 110 du câble mécanique 6 de direction et le moteur électrique 111 sont agencés dans un boîtier supérieur 26.

Le mécanisme est constitué d'uns vis 112 et d'un écrou 113.

Le boîtier supérieur 26 est muni de deux montants 27 et 28, qui supportent une coulisse 29. La coulisse 29 est sensiblement parallèle à l'axe 49 de la crémaillère 31.

Le moteur électrique 111 est fixé sur une embase 115 et sur un montant 116.

Le montant 116 est sensiblement perpendiculaire à l'embase 115 ; l'embase 115 et le montant 116 appartenant à un seul ensemble monobloc.

L'embase 115 est munie de deux paliers 117 et 118, qui sont supportés par la coulisse 29. Le moteur électrique 111 et l'embase 115 peuvent donc se déplacer sur la coulisse 29.

Le moteur électrique 111 a un stator et un rotor 114. La vis 112 est portée et entraînée par le rotor 114 du moteur électrique 111, et elle est disposée du côté opposé au montant 116.

Un pivot 120 est aménagé et fixé sur l'embase 115. L'axe du pivot 120 est sensiblement perpendiculaire à l'embase 115.

Un bras 121 a une extrémité 122, qui est montée et qui s'articule autour du pivot 120.

Le bras 121 porte l'écrou 113 qui reçoit la vis 112.

Le bras 121 a une autre extrémité 123. L'embout fileté 39 de l'extrémité supérieure 15 du câble mécanique 6 de direction vient se fixer dans l'extrémité 123 du bras 121. Un contre-écrou 40 assure le blocage de l'embout fileté 39 dans l'extrémité 123. Le montant 116 de l'embase 115 est relié à l'extrémité 119 de la crémaillère 31, qui est solidaire dudit montant 116.

Afin d'améliorer le fonctionnement du mécanisme à vis et écrou, des billes 60 sont disposées entre l'hélice de la vis 112 avec l'écrou 113.

Lorsque l'ensemble de jonction 110 est intégré à l'ensemble de raccordement inférieur 24, le montant 116 de l'embase 115 est raccordé à cet élément de raccordement inférieur 24, et l'extrémité 123 du bras 121 reçoit l'extrémité inférieure 16 du câble mécanique 6.

Enfin, lorsque l'ensemble de jonction 110 est interposé entre les deux portions 19 et 20 du câble mécanique 6, le montant 116 de l'embase 115 est relié à l'extrémité 22 de la portion 20, et l'extrémité 123 du bras 121 reçoit l'extrémité 21 de la portion 19.

## Revendications

1. Dispositif de direction automobile qui comporte une colonne de direction (1), un volant de direction (2), et une tige de direction (3) des roues directrices (9) du véhicule automobile ; ladite colonne de direction (1) comportant un ensemble à câble mécanique (6), afin de transmettre le mouvement du volant de direction (2) à la tige de direction (3) des roues directrices (9) du véhicule automobile ; l'ensemble à câble mécanique (6) étant relié avec la partie de colonne située du côté du volant de direction (2) par un ensemble de raccordement supérieur (23), et l'ensemble à câble mécanique (6) étant relié avec la partie de colonne située du côté de la tige de direction (3) par un ensemble de raccordement inférieur (24) ; caractérisé en ce que ledit dispositif de direction comporte une correction automatique de trajectoire du véhicule, qui est constituée d'un système d'adaptation automatique de longueur du câble mécanique (6) de direction, afin de diminuer ou d'augmenter ladite longueur du câble mécanique (6) de direction pour agir sur la tige de direction (3), dans le but de modifier l'orientation de chaque roue directrice (9), et de ramener la trajectoire réelle du véhicule vers la trajectoire demandée par la position du volant de direction.

2. Dispositif de direction selon la revendication 1, caractérisé en ce que le système d'adaptation automatique de longueur du câble mécanique (6) de direction est agencé à l'extrémité supérieure (15) du câble mécanique (6), et est intégré à l'ensemble de raccordement supérieur (23).

3. Dispositif de direction selon la revendication 1, caractérisé en ce que le système d'adaptation automatique de longueur du câble mécanique (6) de direction est agencé à l'extrémité inférieure du câble mécanique (16), et est intégré à l'ensemble de raccordement inférieur (24).

4. Dispositif de direction selon la revendication 1, caractérisé en ce que le système d'adaptation automatique de longueur du câble mécanique (6) de direction est agencé sur le câble mécanique (6), à l'extrémité correspondante (21, 22) de chacune des deux portions (19, 20) du câble mécanique (6), et est intégré audit câble mécanique (6) de direction.

5. Dispositif de direction selon l'une quelconque des revendications précédentes, caractérisé en ce que le système d'adaptation automatique de longueur du câble mécanique (6) de direction comporte :
- un ensemble de jonction (50, 70, 90, 110) du câble mécanique (6) de direction ;
- un actionneur (51, 71, 91, 111) de l'ensemble de jonction (50, 70, 90, 110) ;
- un ou des capteurs (41, 42) de la trajectoire réelle du véhicule automobile ;
- un capteur (43) de la trajectoire demandée du véhicule automobile ;
- une unité centrale de traitement et de commande (44) reliée aux différents capteurs et à l'actionneur ;
- de manière que ladite unité centrale (44) reçoive un signal électrique du capteur (43) de trajectoire demandée et du ou des capteurs (41, 42) de trajectoire réelle, et analyse la différence des deux trajectoires afin de pouvoir envoyer à l'actionneur (51, 71, 91, 111) un signal électrique de commande et de contrôle de l'ensemble de jonction (50, 70, 90, 110) du câble mécanique (6) de direction.

6. Dispositif de direction selon la revendication 5, caractérisé en ce que l'actionneur (51, 71, 91, 111) est un moteur électrique.

7. Dispositif de direction selon l'une quelconque des revendications 5 et 6, caractérisé en ce que l'ensemble de jonction (50) du câble mécanique (6) de direction comporte :
- un moteur électrique (51) ;
- deux mécanismes à vis (52, 54) et écrou (53, 55) de sens d'hélice opposé ; les deux mécanismes étant montés dans le moteur électrique (51) ;
- chacun des deux écrous (53, 55) est monté à l'intérieur du rotor (58) du moteur électrique (51) avec lequel il est solidaire en rotation ;
- l'une des vis (54) étant reliée à l'extrémité correspondante (15, 16) du câble mécanique (6) ou à l'extrémité (21) de la portion (19) du câble mécanique (6) ; et l'autre vis (52) étant reliée à l'ensemble de raccordement correspondant (23, 24), ou à l'extrémité (22) de l'autre portion (20) du câble mécanique (6).

8. Dispositif de direction selon l'une quelconque des revendications 5 et 6, caractérisé en ce que l'ensemble de jonction (70) du câble mécanique (6) de direction comporte :
- un moteur électrique (71) ;
- deux mécanismes à vis (72, 74) et écrou (73, 75) de sens d'hélice opposé, qui sont disposés de part et d'autre du moteur électrique (71) ;
- le rotor (76) du moteur électrique (71) entraînant à chacune de ses extrémités la vis correspondante (72, 74) ;
- l'un des écrous (75) étant relié à l'extrémité correspondante (15, 16) du câble mécanique (6) ou à l'extrémité (21) de la portion (19) du câble mécanique (6), et l'autre écrou (73) étant relié à l'ensemble de raccordement correspondant (23, 24) ou à l'extrémité (22) de l'autre portion (20) du câble mécanique (6).

9. Dispositif de direction selon l'une quelconque des revendications 5 et 6, caractérisé en ce que l'ensemble de jonction (90) du câble mécanique (6) de direction comporte :
- un moteur électrique (91) ;
- deux bras (103, 104) dont une des extrémités (105, 107) de chaque bras (103, 104) s'articule autour d'un pivot (100), et portant chacun un écrou (93, 95) d'un mécanisme à vis (92, 94) et écrou (93, 95) de sens d'hélice opposé, les deux vis (92, 94) constituant un seul élément (96) entraîné et porté par le rotor (97) du moteur électrique (91) ;
- un boîtier supérieur (26) portant une coulisse (29) qui est sensiblement parallèle à l'axe du moteur électrique (91) ;
- un montant (99) et une embase (98) sur laquelle sont fixés le moteur électrique (91) et le pivot (100), ladite embase (98) étant munie de deux paliers (101, 102) dans lesquels s'engage ladite coulisse (29) ;
- l'autre extrémité (108) de l'un des deux bras (104) étant reliée à l'extrémité correspondante (15, 16) du câble mécanique (6) ou à l'extrémité (21) mécanique de la portion (19) du câble mécanique (6), et l'autre extrémité (106) de l'autre bras (103) étant reliée à l'ensemble de raccordement correspondant (23, 24) ou à l'extrémité (22) de l'autre portion (20) du câble mécanique (6).

10. Dispositif de direction selon l'une quelconque des revendications 5 et 6, caractérisé en ce que l'ensemble de jonction (110) du câble mécanique (6) de direction comporte :
- un moteur électrique (111) ;
- une embase (115) sur laquelle est fixé le moteur électrique (111) ; qui est munie de deux paliers (117, 118) se déplaçant sur une coulisse (29) portée par un boîtier supérieur (26), ladite coulisse (29) étant sensiblement parallèle à l'axe du moteur électrique (111) ;
- un mécanisme à vis (112) et écrou (113) ; la vis (112) étant entraînée par le rotor (114) du moteur électrique (111) ;
- l'écrou (113) étant relié à l'extrémité correspondante (15, 16) du câble mécanique (6) ou à l'extrémité (21) de la portion (19) du câble mécanique (6) ;
- l'embase (115) du moteur électrique (111) étant reliée à l'ensemble de raccordement correspondant (23, 24) ou à l'extrémité (22) de l'autre portion (20) du câble mécanique (6).

11. Dispositif de direction selon l'une quelconque des revendications précédentes, caractérisé en ce que :
- la colonne de direction est constituée d'une partie haute de colonne (4) et d'une partie intermédiaire de colonne (5) ; la partie haute de colonne (4) est raccordée par l'une de ses extrémités (11) au volant de direction (2) ;
- l'ensemble à câble mécanique (6) est constitué du câble mécanique (6) travaillant en traction et en compression suivant le sens de rotation du volant de direction (2) ;
- l'ensemble de raccordement supérieur (23) relie l'ensemble à câble mécanique (6) avec la partie haute de colonne de direction (4) ;
- l'ensemble de raccordement inférieur (24) relie l'ensemble à câble mécanique (6) avec la tige de direction (3) des roues directrices (9) ;
- l'ensemble de raccordement supérieur (23) est constitué par un pignon (30) qui engrène avec une crémaillère (31) et qui sont montés dans un boîtier supérieur (25, 26) ; ledit pignon (30) étant entraîné en rotation par la partie haute de colonne de direction (4), et ladite crémaillère (31) étant reliée au système d'adaptation automatique de longueur du câble mécanique (6) de direction, qui est agencé à l'extrémité supérieure (15) du câble mécanique (6) et est intégré à l'ensemble de raccordement supérieur (23).

12. Dispositif de direction selon la revendication 11, caractérisé en ce que
- l'ensemble de jonction (50) du câble mécanique (6) de direction et le moteur électrique (51) sont montés dans le boîtier supérieur (25) ;
- les deux mécanismes à vis (52, 54) et écrou (53, 55) de sens d'hélice opposé sont agencés dans un manchon externe (57) ;
- le rotor (58) du moteur électrique (51) est engagé sur le manchon externe (57), et il est solidaire avec ledit manchon externe (57) qui est supporté par deux roulements (59) ;
- les deux écrous (53, 55) constituent un manchon interne (56) unique, dont la face extérieure (62) porte un épaulement (65) muni de cannelures (66), qui coopèrent avec des cannelures (67) aménagées sur la face intérieure (63) du manchon externe (57) ;
- la crémaillère (31) se prolonge par une tige (68) sur laquelle est aménagée l'une des vis (52) ; une autre tige (69) porte l'autre vis (54) du mécanisme correspondant sur laquelle est fixé l'embout fileté (39) de l'extrémité supérieure (15) du câble mécanique (6) de direction avec un contre-écrou (40) de blocage ;
- des billes (60) sont disposées entre chacune des vis (52, 54) et l'écrou (53, 55) correspondant.

13. Dispositif de direction selon la revendication 11, caractérisé en ce que l'ensemble de jonction (70) du câble mécanique (6) de direction et le moteur électrique (71) sont montés dans un boîtier supérieur (26) muni de deux montants (27, 28) supportant une coulisse (29) sensiblement parallèle à l'axe (49) de la crémaillère (31) ;
- le moteur électrique (71) est fixé sur une embase (77) avec un montant (78), ladite embase (77) est munie de deux paliers (79, 80) dans lesquels s'engage la coulisse (29) ;
- le moteur électrique (71) porte à chacune des extrémités du rotor (76), la vis correspondante (72, 74) d'un mécanisme à vis (72, 74) et écrou (73, 75) de sens d'hélice opposé ;
- la crémaillère (31) se prolonge par un manchon (81) dans lequel est aménagé l'écrou (73) du mécanisme correspondant ;
- l'embout fileté (39) de l'extrémité supérieure (15) du câble mécanique (6) de direction vient se fixer dans un manchon (82) avec un contre-écrou (40) de blocage, dans ledit manchon (82) est aménagé l'écrou (75) du mécanisme correspondant ;
- des billes (60) sont disposés entre chacune des vis (72, 74) et l'écrou (73, 75) correspondant.

14. Dispositif de direction selon la revendication 11, caractérisé en ce que l'ensemble de jonction (110) du câble mécanique (6) de direction et le moteur électrique (111) sont montés dans un boîtier supérieur (26) muni de deux montants (27, 28) supportant une coulisse (29) sensiblement parallèle à l'axe de la crémaillère (31) ;
- le moteur électrique (111) est fixé sur une embase (115) avec un montant (116), ladite embase (115) est munie de deux paliers (117, 118) dans lesquels s'engage la coulisse (29) ;
- le montant (116) de l'embase (115) est relié à l'extrémité (119) de la crémaillère (31) avec laquelle il est solidaire ;
- le moteur électrique (111) porte et entraîne, du côté opposé au montant (116), une vis (112) d'un mécanisme à vis (112) et écrou (113) ;
- le mécanisme à vis (112) et écrou (113) a son écrou (113) qui est disposé dans un bras (121), dont une extrémité (122) des extrémités (122, 123) s'articule autour d'un pivot (120) monté sur l'embase (115) ;
- l'embout fileté (39) de l'extrémité supérieure (15) du câble mécanique (6) de direction vient se fixer dans l'autre extrémité (123) dudit bras (121), et il est muni d'un contre-écrou (40) de blocage ;
- des billes (60) sont disposées entre la vis (112) et l'écrou (113).
